(19) Europäisches Patentamt
European Patent Office
Office européen des brevets

(11) **EP 2 608 426 A1**

(12) **EUROPEAN PATENT APPLICATION**

(43) Date of publication:
**26.06.2013 Bulletin 2013/26**

(51) Int Cl.:
**H04B 10/64** $^{(2013.01)}$

(21) Application number: **11194983.0**

(22) Date of filing: **21.12.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Nokia Siemens Networks Oy**
**02610 Espoo (FI)**

(72) Inventor: **Smolorz, Sylvia**
**81379 München (DE)**

(54) **Method and device for determining the polarization split in a heterodyne coherent receiver**

(57)     A coherent polarization diversity receiver is disclosed in which the phase angle difference between the first polarized input signal and the first polarized local oscillator signal is determined and also the phase angle difference between the second polarized input signal and the second polarized local oscillator signal is determined and based on this information a portion of the generated first and second electrical output signals is selected to produce the final output signal for further processing.

Fig. 2

EP 2 608 426 A1

## Description

Field of the invention

The invention relates to optical transmission systems with phase modulated signal transmission and heterodyne coherent polarization diversity receivers.

Optical access networks become more and more popular to satisfy the growing demand for higher bandwidth. Different types of passive optical networks (PON) have been deployed in the past, but next generation optical access networks can provide higher bandwidth by using more powerful and efficient modulation techniques and transmission principles.

In phase-modulated transmission systems the data is coded in the phase angle of the carrier light, generally called phase shift keying (PSK). An embodiment of PSK for instance is quadrature phase shift keying (QPSK), wherein the symbols hold angles of 0°, 90°, 180°, and 270°. Therefore the receiver needs to determine the phase angle of the received light in order to extract the data. Instead of setting the phase angle to code symbols, an alternative is to change the phase between two consecutive symbols. This method is called differential phase shift keying (DPSK). DPSK is significantly simpler to implement than ordinary PSK since there is no need for the demodulator to have a copy of the reference signal to determine the exact phase of the received signal.

Next generation optical access systems not only shall provide higher bandwidth but also higher reach. Higher reach means to convey data over longer distances. Both requirements are the motivation to use coherent communication techniques.

Coherent transmission systems have several advantages. The receiver sensitivity can be improved by up to 20 dB compared with that of systems implementing intensity modulation with direct detection. Second, the use of coherent detection also allows a more efficient use of fiber bandwidth by increasing the spectral efficiency of the systems.

A key component in coherent optical transmission systems is the receiver. A coherent receiver is able to distinguish and evaluate the optical phase and polarization of the received light. The basic principle of a coherent receiver is to combine the incoming signal light with light which is locally generated by a narrow line width laser, called local oscillator.

Mixing of the received optical signal with the local oscillator improves the receiver's performance.

As mentioned before, a coherent receiver must be able to distinguish and evaluate the optical phase and polarization of the received light. In an asynchronous receiver the receiver does not get any phase information from the sender and therefore has to retrieve the phase information by itself. Especially the phase information is necessary to decode the information coded in the phase shifts of a phase shift keying signal. Another important aspect is polarization. The polarization state of the received signal and the local oscillator plays an important role. Since the polarization state of the received optical signal is unknown, there might be a polarization mismatch with the local oscillator.

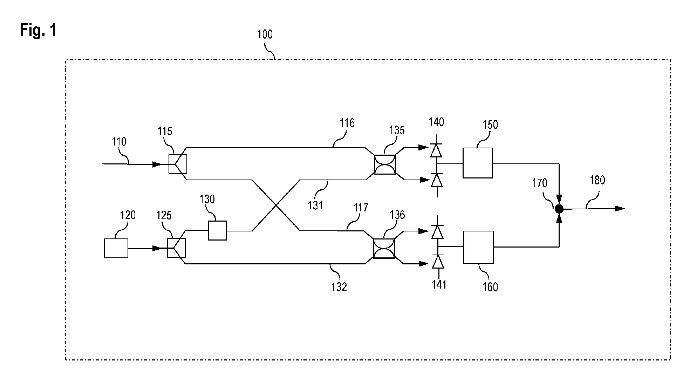

To cope with this problem, a two port balanced coherent receiver can be used. Fig. 1 illustrates a schematic coherent polarization diversity receiver.

The incoming input signal light is split by a polarization beam splitter into two orthogonal polarization planes. Further, the local oscillator (LO) light is divided into two light beams by a splitter and one branch is left unchanged while the other branch shifts the polarization of the LO light by 90°. Now there are two orthogonal polarized components of the signal light available as well as two orthogonal polarized components of the LO light. According to Fig. 1 the components of the signal and the LO light are combined by a 3 dB coupler. The resulting light paths leaving the couplers are fed into two pairs of photodiodes. The photodiodes create electric current which is typically transformed into a proportional voltage by a so called trans-impedance amplifier. The resulting signals are digitized by analog-to-digital converters (ADC) and fed to appropriate electronics for further data processing.

Each beam combiner in the two branches combines signal light with local oscillator light of the proper polarization. Dependent on the polarization state of the signal light, which is time variable in a transmission system, the relative weight of the signal in the two branches will vary.

However it is guaranteed, that independent from the polarization state of the input signal, the projection of the signal onto the local oscillator light cannot be zero for both branches at the same time. It could be zero for one and maximum for the other, or equally distributed between the two branches, or any distribution between those two extreme cases.

In the case where the polarization of the signal light happens to be perfectly aligned to the polarization of the local oscillator light in one branch, this branch will receive all the useable signal, while the orthogonal polarization component associated with the other branch is zero, so that only local oscillator light is present in this branch. This results in a high quality signal in the well aligned branch while the other branch produces a receiver signal having significant noise.

However the polarization state of the incoming signal is random and not predictable. The source for unpredictable polarization state is caused by the so called polarization-mode dispersion. Perfect operation of a coherent receiver requires exact matching of the polarization state of the local oscillator to that of the received input signal. This is given when the polarization state of the optical fields of the LO and the input signal are equal. If however the polarization states of the LO and the input signal are orthogonal to each other, the resulting signal disappears completely.

To cope with the problem of unknown polarization state of the incoming signal, both branches of the balanced receivers with orthogonal polarization have to be evaluated. The analysis which one of the balanced receivers has a useful signal and which one outputs more or less noise, is an important task.

A known method for analyzing the signal and to decide which path contains the better signal is to process both signal paths in the receiver and to perform error estimation e.g. determining the error rate via FEC. The disadvantage of this procedure however is that appropriate electronics have to be provided for both signal paths. This results in higher footprint of electronics, higher power consumption and increased costs.

Another known method consists in adding a polarization controller at the signal input port of the receiver, which is then dynamically adjusted to align the polarization of the input light to the local oscillator light. This method requires another optical element (the polarization controller) which is costly and attenuates the input signal, leading to a decreased receiver sensitivity. It also requires sophisticated and fast control electronics in order to follow the polarization variations of the signal. Another known method consists of adding a 90 degree optical hybrid to the receiver, and doubling the number of photodiodes. In such a receiver, the signal light is mixed once with the LO light of each polarization directly, and once with the LO light of the each polarization phase shifted by 90 degrees, essentially creating two polarization diverse balanced receivers, with the LO light of one polarization diverse balanced receiver phase shifted by 90 degrees with respect to the LO light in the other polarization diverse balanced receiver. This allows for the full recovery of the optical field, and with data processing the distribution of the signal among the two orthogonal polarizations can be determined. The disadvantage of the method is the doubling of the number of photodiodes and TIAs that are necessary, the splitting of the LO power between the two pairs of polarization diverse balanced receivers, and the sophisticated data processing. The recovery algorithm also requires the insertion of a training pattern in the data, which increases the overhead and decreases the usable data bandwidth.

The invention proposes to use the differences between the estimated phase deviations for the four possible symbols (0°, 90°, 180°, 270°) to decide which of the two orthogonal polarization directions is better aligned to the signal.

Signal light :

$$A_s \sin(\omega_s t + \varphi_s) \tag{1}$$

$A_s$= signal amplitude (electric field amplitude)
$\varphi_s$=signal phase (symbol, 0, 90°, 180°, 270°)
$\omega_s$=signal frequency (optical)

Local oscillator light:

$$A_{LO} \sin(\omega_{LO} t + \varphi_{LO}) \tag{2}$$

$A_{LO}$=local oscillator amplitude (electric field amplitude)
$\varphi_{LO}$=LO phase
$\omega_{LO}$=LO frequency (optical)

Coherent reception multiplies the electrical fields of the signal and local oscillator:

signal*LO                                                                                                              ->

$$\frac{A_s A_{LO}}{2}\left[\sin((\omega_s + \omega_{LO})t + \varphi_s + \varphi_{LO}) + \sin((\omega_s - \omega_{LO})t + \varphi_s - \varphi_{LO})\right] \tag{3}$$

The component at the sum frequency cannot be detected by the receiver due to its low-pass characteristics.

Received signal: $\frac{A_s A_{LO}}{2}\left[\sin((\omega_s - \omega_{LO})t + \varphi_s - \varphi_{LO})\right]$ (4)

The difference between the signal frequency and the LO frequency is the intermediate frequency $\omega_{IF}$ plus the frequency error $\Delta\omega$ :

$$\omega_s - \omega_{LO} = \omega_{IF} + \Delta\omega \qquad (5)$$

After analog to digital conversion, the received signal (4) is multiplied in the digital signal processing unit (DSP) with **sin** *($\omega_{IF}t$)* and **cos** *($\omega_{IF}t$)* to detect the I and Q channels. I channel:

$$s_I = \frac{A_s A_{LO}}{2}\left[\sin\left(\left(\omega_{IF} + \Delta\omega\right)t + \varphi_s - \varphi_{LO}\right)\right] * \sin\left(\omega_{IF}t\right)$$
$$= \frac{A_s A_{LO}}{4}\left[\cos\left(\Delta\omega t + \varphi_s - \varphi_{LO}\right) - \cos\left(\left(2\omega_{IF} + \Delta\omega\right)t + \varphi_s + \varphi_{LO}\right)\right] \qquad (6)$$

$$s_Q = \frac{A_s A_{LO}}{2}\left[\sin\left(\left(\omega_{IF} + \Delta\omega\right)t + \varphi_s - \varphi_{LO}\right)\right] * \cos\left(\omega_{IF}t\right)$$
$$= \frac{A_s A_{LO}}{4}\left[\sin\left(\Delta\omega t + \varphi_s - \varphi_{LO}\right) + \sin\left(\left(2\omega_{IF} + \Delta\omega\right)t + \varphi_s + \varphi_{LO}\right)\right] \qquad (7)$$

Again, a low pass filter removes the terms which contain the high ($2\omega_{IF}$) frequencies.
Using the ratio of the Q and I channels we can extract the phase:

$$\arctan\left(\frac{s_Q}{s_I}\right) = \Delta\omega\, t + \varphi_s - \varphi_{LO} \qquad (8)$$

Subtracting the previous angle from the current one yields

$$\Delta\omega\, t_D + \Delta\varphi_s \qquad (9)$$

where $t_D$ is the bit period. The first term of (9) is proportional to the frequency offset of the local oscillator laser and will be used as control input for the laser control algorithm, which aims to minimize this offset by changing the LO laser frequency $\omega_{LO}$ until $\Delta\omega t_D$ is zero. The second term is the data symbol for differential phase coded communication. In the case of DQPSK, $\Delta\varphi_s$ is a multiple of 90°.
If the polarizations of LO and signal are badly aligned (for one receiver), there will be very little signal and the inbuilt automatic gain control (AGC) of the receiver amplifier will not be saturated. In this case, the carrier (= unmodulated laser light) will not be suppressed in comparison to the signal.
This will add a term to the detected signal which does not include the symbol phase:

$$s_I = \frac{A_s A_{LO}}{4}\left[\cos\left(\Delta\omega t + \varphi_s - \varphi_{LO}\right) + a_{CW}\cos\left(\Delta\omega t - \varphi_{LO}\right)\right] \qquad (10)$$

$$s_Q = \frac{A_s A_{LO}}{4}\left[\sin\left(\Delta\omega t + \varphi_s - \varphi_{LO}\right) + a_{CW}\sin\left(\Delta\omega t - \varphi_{LO}\right)\right] \qquad (11)$$

Here $a_{CW}$ is the fractional contribution of the carrier peak to the received signal. This contribution will shift the frequency estimator line for $\varphi_s$=90° and 270° by an equal amount, but in opposite directions. For 0° there is no shift, because both terms are identical, and for 180° there is also no shift because of the periodicity of the arctan function.

Therefore, by comparing the measured frequency shifts for the different symbols it is possible to distinguish between a shift which is caused by a frequency error and a shift which is caused by a polarization mismatch.

The difference D between the estimator output for 90° and 270° is proportional to the misalignment of the polarizations. This is used to determine which of the two polarizations should be used (the one with the smaller D). In case D is 0 for both polarizations, either one is picked at random (if newly starting the system), or, if D was previously not 0 for one of the receivers so that the other was picked, the system continues in this polarization, or an equally weighted sum of the two can be used, since they both have sufficient alignment of their polarizations.

It is an object of the invention to provide a beneficial solution for utilizing a simple and efficient way to evaluate the polarization state in each path of the receiver and to select the appropriate signal part for further processing.

This is achieved according to the features of the independent claims. Further embodiments result out of depending claims.

In order to overcome the disadvantages, a method and an arrangement for a coherent polarization diversity receiver is presented.

In an embodiment of the invention, the coherent polarization diversity receiver comprises a local oscillator laser, the light of which is split into two parts of mutually orthogonal polarizations, which are mixed optically with the signal light, the signal light also having been split into corresponding polarizations, so that light of the local oscillator and signal having equal polarization directions is combined in the two paths of the receiver optics. Each polarization is then detected separately by a pair of photodiodes, generating an electrical output signal proportional to the optical signal for each polarization.

The phase angle difference between the first polarized input signal and the first polarized LO portion is determined, and also the phase angle difference between the second polarized input signal and the second polarized LO portion is determined. This information is then used to select a portion of the first electrical output signal and a portion of the second electrical output signal.

The advantage of this method is, that the phase information, which is necessary for the correct operating of the receiver, can be used directly to decide and to determine, which portion of the digitized signal light of each branch of the receiver is used for the final output signal.

To achieve the mixing, 2x2 waveguide couplers might be used. In another embodiment, free-space beam splitters might be used. In yet another embodiment, the optical splitting and mixing might be achieved using fiber-based 2x2 couplers.

In one embodiment, each pair of photodiodes is configured so that the electrical signal proportional to the power in the local oscillator laser and in the signal light cancels and the electrical output is only proportional to the product of the local oscillator light and the signal light. In another embodiment, one arm of the 2x2 splitters is terminated, and a single photodiode is used on the other arm, generating a signal proportional to the sum of the local oscillator laser power, the optical signal power, and the product of the local oscillator light and the signal light. AC coupling of the electrical output is then used to remove the components of the electrical signal which are proportional to the power of the local oscillator light and the signal light, leaving only the electrical signal proportional to the product of the local oscillator light and the signal light for further analysis.

In an embodiment, a signal analysis block determines the phase angle difference between the first polarized input signal and the first polarized local oscillator signal and the phase angle difference between the second polarized input signal and the second polarized local oscillator signal. A decision algorithm then selects a first portion of the first electrical output signal and a second portion of the second electrical output signal for further processing.

In an embodiment, these first and second portions are determined by a control and decision unit.

In another embodiment of the invention, these first and second portions are combined by a signal selection and weighting unit. This weighting unit may assign weights to the signal with values between 0 and 1.

In a simplified version of the invention, the decision unit does not combine the first and second signal, but instead selects one for further processing and discards the other, leading to a further simplification of the data processing unit, because in this case, it is not necessary to determine the proper time shift between the first signal and the second signal. This might be achieved with a simple switch.

Embodiments are possible in which the first input signal and the second input signal are orthogonal to each other, and the first LO signal and the second LO signal are orthogonal to each other.

In an embodiment, the control signals necessary to decide on the proper weighting between the first portion of the signal and the second portion of the signal is derived from the control signal used for frequency control of the local oscillator laser.

In another embodiment, separate control circuitry may be used for the laser frequency control and the weighting and decision unit.

In another embodiment, the phase offset measured for symbols 0° and 180° is used to control the LO frequency, and the difference between the phase offset measured for symbols 90° and 270° is used to control a selection switch which switches from one polarization to the other.

It is further noted that the method steps described above may be processed by an apparatus, which comprises a local oscillator having a polarization, wherein the local oscillator generates a first and a second polarized local oscillator signal, the apparatus having a polarization unit to split the polarization of the input signal into a first polarized input signal and a second polarized input signal, the apparatus having a first coupler/splitter unit configured to mix the first polarized input signal with the first polarized local oscillator signal and to feed the signal light into a pair of photo diodes to generate a first electrical output signal, the apparatus further having a second coupler/splitter unit configured to mix the second polarized input signal with the second polarized local oscillator signal and to feed the signal light into a further pair of photo diodes to generate a second electrical output signal, the apparatus further comprises a phase angle detection unit configured to detect the phase angle difference between the first polarized input signal and the first polarized local oscillator signal and another phase angle detection unit configured to detect the phase angle difference between the second polarized input signal and the second polarized local oscillator signal, the apparatus comprising a selection and weighting unit configured to select a first portion of the first electrical signal and a second portion of the second electrical signal to combine an output signal for further processing.

Embodiments of the invention are shown and illustrated in the following figures:

Fig. 1 shows a known coherent polarization diversity receiver

Fig. 2 and 3 show examples of the inventive coherent polarization diversity receiver with a control and decision circuit and a selection and weighting unit

Detailed description

Figure 1 shortly illustrates a state of the art receiver. The input signal 110 is split by a polarization splitter 115 in signals 116 and 117. A local oscillator (LO) light 120 is also split by splitter 125 into a LO light 132 and an LO light 131 the polarization of which is made orthogonal to LO light 132 by polarization rotator 130, so that now the polarizations of signal 116 and LO light 131 are aligned and also the polarizations of signal 117 and LO light 132 are aligned. In a first branch the signal light 116 and LO light 131 is mixed by a coupler/splitter and fed into a pair of photo diodes. The same processing is done in the second branch with signal light 117 and LO light 132. The resulting analog electrical signals leaving the balanced photo detectors 140 and 141 in the first and the second branch of the receiver are further processed by appropriate units 150,160 and combined by digital combiner 170 to a final output signal 180.

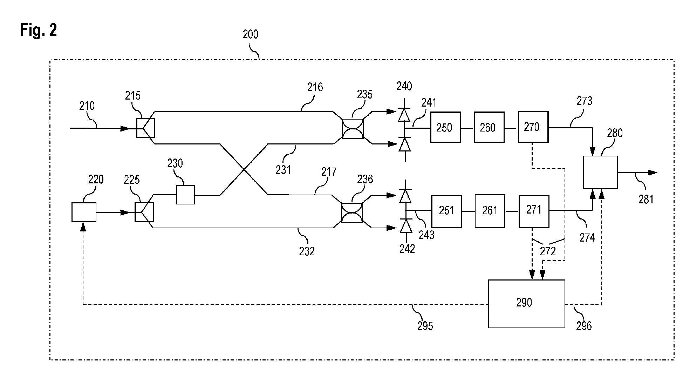

Figure 2 shows a first embodiment of the invention. An input signal 210 of the receiver 200 is split by a polarization splitter 215 into two orthogonal components 216 and 217. A local oscillator 220 generates laser light having a polarization (LO light). This LO light is split evenly by a splitter 225 into a first part 232 which is left unchanged while a second part is polarization shifted by 90 degrees via a polarization shifter 230 to LO light 231, so that now the polarizations of signal 216 and LO light 231 are aligned and also the polarizations of signal 217 and LO light 232 are aligned. Signal light 216 and one part of the LO light is mixed with a combiner/splitter 235 and fed to a first pair of photodiodes 240.

Also the orthogonal polarized signal light 217 and the other part of the LO light 232 is mixed with a combiner/splitter 236 and fed to a second pair of photodiodes 241. Both pairs of photodiodes are arranged as balanced receivers and output an electric signal current. This signal current generated by the photodiodes is typically transformed to a proportional signal voltage by so called trans impedance amplifiers (TIA) 250, 251. Then the output of the TIAs is fed to analog digital converters (ADC) 260, 261 and further fed into the phase detectors 270, 271. The phase detectors each output a digital electrical signal and feed it into a selection and weighting unit 280. The weighting unit composes an output signal 281 by combining arbitrary portions of the digitized signals 273 and 274. The phase detectors 270 and 271 each analyze the phase angles of the signals in both branches and transfer this information into a control and decision unit 290. The control and decision unit controls on the one hand via control signal 295 the frequency of the local oscillator laser and on the other hand the selection and weighting unit 280 via control signal 296.

For perfect setting of the local oscillator laser, the detected symbols will be perfect multiples of 90°. If the local oscillator is detuned, the detected angles will be larger or smaller proportional to the frequency offset. Therefore, this offset can be used as input to the frequency control unit.

If the weight of the signal light is very small in one branch of the balanced receiver, most of the electrical signal will be due to un-modulated light. This results in an offset in the detected phases which is not due to the frequency offset of the local oscillator light. It can be distinguished because the offset due to frequency detuning is the same for all detected angles, whereas the offset due to unmodulated light is 0 for phase angles 0° and 180°, and of opposite sign for 90° and 270°.

The advantage of this method is, that the phase information, which is necessary for the correct operating of the receiver, can be used directly to decide and to determine, which portion of the digitized signal light of each branch of the receiver is used for the final output signal 281.

If the phase angle deviation from multiples of 90° varies strongly for 90° and 270° in one branch of the receiver, then a big portion of the signal in the other branch of the receiver is used to create the final output signal and in consequence, if the phase angle deviation from multiples of 90° is near zero for all 4 symbols simultaneously in a branch of the receiver, a big portion of the resulting signal in this branch is taken to form the final output signal.

It is an advantage, that always the majority of the output signal can be taken from the receiver branch, which has lower noise figures.

It is also an advantage, that not any additional electronics or circuits in the signal path are necessary to decide, which portion of the signals 273 and 274 have to be taken to create an optimal output signal 281. Only the selection and weighting unit 280 is necessary to create the final output signal 281. The selection and weighting unit 280 is controlled by the control and decision unit 290. The control unit is arranged to receive the phase information from the phase detectors 270, 271 and controls the selection and weighting unit 280 via control signal 296.

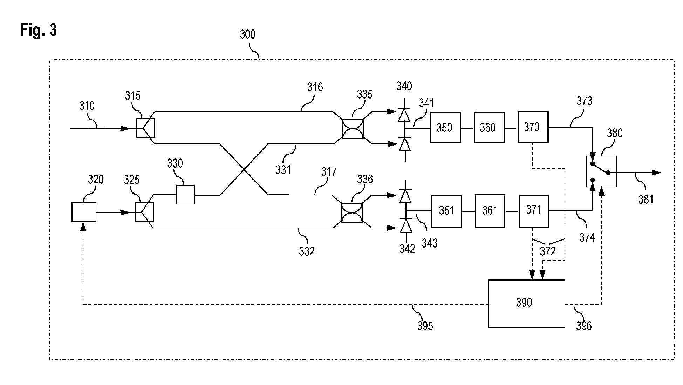

Figure 3 shows an interesting and cost saving alternative of the invention having an extremely simplified selection and weighing unit 380. Figure 3 shows an inventive receiver, the structure of which is identical to Figure 2 but differs only in the selection and weighing unit.

Unit 380 consists of a simple switch to select exclusively either the electrical signal of one or the other branch of the receiver, depending on the fact, which one of the signals 373 or 374 has the better phase angle difference.

REFERENCE SIGNS:

| 100 | coherent polarization diversity receiver |
| 110 | received input signal |
| 115 | polarization beam splitter |
| 116 | polarized input signal |
| 117 | Orthogonal polarized input signal |
| 120 | local oscillator |
| 125 | 3 dB splitter |
| 130 | 90° polarization shifter |
| 131 | 90° shifted local oscillator light |
| 132 | local oscillator light |
| 135, 136 | coupler/beam splitter |
| 140, 141 | photo diodes |
| 150, 160 | electronic circuit |
| 170 | signal combiner |
| 180 | electrical bit stream |

| 200 | selective coherent polarization diversity receiver |
| 210 | received input signal |
| 215 | polarization beam splitter |
| 216 | polarized input signal |
| 217 | orthogonal polarized input signal |
| 220 | local oscillator |
| 225 | 3 dB splitter |
| 230 | 90° polarization shifter |
| 231 | 90° shifted local oscillator light |
| 232 | local oscillator light |
| 235, 236 | coupler/beam splitter |
| 240, 242 | pair of photo diodes |
| 241, 243 | electrical output signal |
| 250, 251 | trans impedance amplifier |
| 260, 261 | analog/digital converter |
| 270, 271 | phase detector |
| 272 | phase information signal |
| 273 | electrical output signal of first branch |
| 274 | electrical output signal of second branch |
| 280 | signal selection and weighting unit |
| 281 | final receiver output |
| 290 | control and decision unit |
| 295 | control signal for local oscillator |
| 296 | control signal for selector unit |
| 300 | selective coherent polarization diversity receiver |
| 310 | received input signal |
| 315 | polarization beam splitter |
| 316 | polarized input signal |
| 317 | orthogonal polarized input signal |

| 320 | local oscillator |
|---|---|
| 325 | 3 dB splitter |
| 330 | 90° polarization shifter |
| 331 | 90° shifted local oscillator light |
| 332 | local oscillator light |
| 335, 336 | coupler/beam splitter |
| 340, 342 | pair of photo diodes |
| 341, 343 | electrical output signal |
| 350, 351 | trans impedance amplifier |
| 360, 361 | analog/digital converter |
| 370, 371 | phase detector |
| 372 | phase information signal |
| 373 | electrical output signal of first branch |
| 374 | electrical output signal of second branch |
| 380 | signal selector switch |
| 381 | final receiver output |
| 390 | control and decision unit |
| 395 | control signal for local oscillator |
| 396 | control signal for selector unit |

**Claims**

1. A method for a coherent polarization diversity receiver, the coherent polarization diversity receiver (200) comprising a local oscillator (220) having a polarization and configured to generate a first and a second polarized local oscillator signal (231, 232), the method comprising:

   - splitting the polarization of the input signal(210) to generate a first polarized input signal (216) and a second polarized input signal (217),
   - mixing the first polarized input signal (216) with the first polarized local oscillator signal (231) via a coupler/splitter unit (235), generating a first electrical output signal (241) via a pair of photo diodes (240),
   - mixing the second polarized input signal (217) with the second polarized local oscillator signal (232) via a coupler/splitter unit (236), generating a second electrical output signal (243) via a further pair of photo diodes (242),
   - detecting the phase angle difference for the first polarized input signal and the first polarized local oscillator signal (270),
   - detecting the phase angle difference for the second polarized input signal and the second polarized local oscillator signal (271),
   - selecting a first portion of the first electrical output signal (273) and a second portion of the second electrical output signal (274) for further processing.

2. A method for a coherent polarization diversity receiver according to claim 1,

   - wherein the first portion of the first output signal (273) and the second portion of the second output signal (274) is determined by a control and decision unit (290).

3. A method for a coherent polarization diversity receiver according to claim 1 and 2,

   - wherein the first portion of the first output signal (273) and the second portion of the second output signal (274) is combined by a signal selection and weighting unit (280).

4. A method for a coherent polarization diversity receiver according to claim 3,

   - wherein the ratio of the first portion of the first output signal (273) and the ratio of the second portion of the second output signal (274) can vary between 0 and 1.

5. A method for a coherent polarization diversity receiver according to claim 3,

   - wherein the signal selection and weighting unit (280) either selects only the first portion of the first output signal (273) or the second portion of the second output signal (274) to create an output signal (281).

6. A method for a coherent polarization diversity receiver according to claim 5,

   - wherein the signal selection and weighting unit (280) is a simple switch (380).

7. A method for a coherent polarization diversity receiver according to claim 1 - 6,

   - wherein the polarization of the second input signal (217) is orthogonal to the polarization of the first input signal (216).

8. A method for a coherent polarization diversity receiver according to claim 1 to 6,

   - wherein local oscillator signal (231) is polarization shifted by 90 degrees compared to the local oscillator signal (232).

9. A coherent polarization diversity receiver apparatus (200), the apparatus comprising a

   - a local oscillator (220) having a polarization and configured to generate a first and a second polarized local oscillator signal (231, 232),
   - a polarization unit for splitting the polarization of the input signal (210) into a first polarized input signal (216) and a second polarized input signal (217),
   - a coupler/splitter unit (235) configured to mix the first polarized input signal (216) with the first polarized local oscillator signal (231) for feeding the signal light into a pair of photo diodes (240) to generate a first electrical output signal (241),
   - a coupler/splitter unit (236) configured to mix the second polarized input signal (217) with the second polarized local oscillator signal (232) for feeding the signal light into a pair of photo diodes (242) to generate a second electrical output signal (243),
   - a phase angle detection unit (270) configured to detect the phase angle difference between the first polarized input signal (216) and the first polarized local oscillator signal (231),
   - a further phase angle detection unit (271) configured to detect the phase angle difference between the second polarized input signal (216) and the second polarized local oscillator signal (232),
   - a selection and weighting unit (280) configured to select a first portion of the first electrical signal (273) and a second portion of the second electrical signal (274) to combine an output signal (281) for further processing.

10. A coherent polarization diversity receiver apparatus according to claim 9,

    - wherein the ratio of the first portion of the first output signal (273) and the ratio of the second portion of the second output signal (274) is determined by a control and decision unit (280).

**11.** A coherent polarization diversity receiver apparatus according to claim 9 or 10,

- wherein the control and decision unit (280) determines the ratio of the input signals (273) and (274) based on the control signals received from the phase angle detection units (270), (271).

**Fig. 1**

**Fig. 2**

**Fig. 3**

Europäisches
Patentamt

European
Patent Office

Office européen
des brevets

## EUROPEAN SEARCH REPORT

Application Number

EP 11 19 4983

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 086 130 A1 (ALCATEL LUCENT [FR]) 5 August 2009 (2009-08-05) * paragraphs [0023] - [0025] * * paragraphs [0044] - [0061] * * figures 3, 4 * | 1-10 | INV. H04B10/148 |
| X | US 2011/103529 A1 (KIM INWOONG [US] ET AL) 5 May 2011 (2011-05-05) * abstract * * paragraphs [0023] - [0025] * * paragraphs [0027] - [0028] * * pages 1B, 2 * | 1-10 | |
| A | EP 0 467 358 A2 (FUJITSU LTD [JP]) 22 January 1992 (1992-01-22) * page 2, line 28 - page 3, line 12 * * page 8, line 53 - page 9, line 19 * * page 10, line 43 - page 11, line 18 * * figures 11, 17-19 * | 1-11 | |
| A | EP 0 390 069 A2 (NEC CORP [JP]) 3 October 1990 (1990-10-03) * abstract * * figures 1-3 * | 1-11 | TECHNICAL FIELDS SEARCHED (IPC) H04B |
| A | EP 0 352 809 A2 (NEC CORP [JP]) 31 January 1990 (1990-01-31) * the whole document * | 1-11 | |
| A | EP 0 329 186 A2 (FUJITSU LTD [JP]) 23 August 1989 (1989-08-23) * abstract * * column 1, line 6 - column 3, line 2 * * figures 2, 4-7 * | 1-11 | |

The present search report has been drawn up for all claims

| Place of search | Date of completion of the search | Examiner |
|---|---|---|
| Munich | 26 April 2012 | Rolan Cisneros, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 11 19 4983

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2012

| Patent document cited in search report | | | Publication date | Patent family member(s) | | | Publication date |
|---|---|---|---|---|---|---|---|
| EP 2086130 | A1 | | 05-08-2009 | CN | 101499873 | A | 05-08-2009 |
| | | | | EP | 2086130 | A1 | 05-08-2009 |
| | | | | US | 2009190926 | A1 | 30-07-2009 |
| US 2011103529 | A1 | | 05-05-2011 | JP | 2011103650 | A | 26-05-2011 |
| | | | | US | 2011103529 | A1 | 05-05-2011 |
| EP 0467358 | A2 | | 22-01-1992 | CA | 2047284 | A1 | 19-01-1992 |
| | | | | DE | 69124301 | D1 | 06-03-1997 |
| | | | | DE | 69124301 | T2 | 05-06-1997 |
| | | | | EP | 0467358 | A2 | 22-01-1992 |
| | | | | JP | 2820511 | B2 | 05-11-1998 |
| | | | | JP | 4078251 | A | 12-03-1992 |
| | | | | US | 5253097 | A | 12-10-1993 |
| EP 0390069 | A2 | | 03-10-1990 | DE | 69024989 | D1 | 07-03-1996 |
| | | | | DE | 69024989 | T2 | 30-05-1996 |
| | | | | EP | 0390069 | A2 | 03-10-1990 |
| | | | | JP | 2031162 | C | 19-03-1996 |
| | | | | JP | 2254830 | A | 15-10-1990 |
| | | | | JP | 7067093 | B | 19-07-1995 |
| | | | | US | 5138476 | A | 11-08-1992 |
| EP 0352809 | A2 | | 31-01-1990 | DE | 68927969 | D1 | 22-05-1997 |
| | | | | DE | 68927969 | T2 | 11-09-1997 |
| | | | | EP | 0352809 | A2 | 31-01-1990 |
| | | | | US | 5023946 | A | 11-06-1991 |
| EP 0329186 | A2 | | 23-08-1989 | DE | 68927524 | D1 | 23-01-1997 |
| | | | | DE | 68927524 | T2 | 30-04-1997 |
| | | | | EP | 0329186 | A2 | 23-08-1989 |
| | | | | JP | 1211736 | A | 24-08-1989 |
| | | | | JP | 1881141 | C | 21-10-1994 |
| | | | | JP | 6003512 | B | 12-01-1994 |
| | | | | US | 4965858 | A | 23-10-1990 |

EPO FORM P0459

For more details about this annex : see Official Journal of the European Patent Office, No. 12/82